# EUROPÄISCHE PATENTSCHRIFT

(11) **EP 3 443 422 B1**
(45) Veröffentlichungstag und Bekanntmachung des Hinweises auf die Patenterteilung: **19.05.2021**
(21) Anmeldenummer: 17700888.5
(22) Anmeldetag: 18.01.2017
(51) Int. Cl.: G05B 19/409, G06F 3/041

(54) **WERKZEUGMASCHINE SOWIE VERWENDUNG EINES BERÜHREMPFINDLICHEN DISPLAYS ZUR ANSTEUERUNG EINES MASCHINENTEILS EINER WERKZEUGMASCHINE**
MACHINE TOOL AND USE OF A TOUCH-SENSITIVE DISPLAY FOR CONTROL OF A MACHINE PART OF A MACHINE TOOL
MACHINE-OUTIL ET UTILISATION D'UN ÉCRAN TACTILE POUR COMMANDER UN ORGANE D'UNE MACHINE-OUTIL

(30) Priorität: 16.04.2016 DE 102016004630
(43) Veröffentlichungstag der Anmeldung: 20.02.2019
(73) Patentinhaber: J.G. Weisser Söhne GmbH & Co. KG, 78112 St. Georgen (DE)
(72) Erfinder: RETTICH, Thorsten, 78126 Königsfeld (DE)
(74) Vertreter: Mertzlufft-Paufler, Cornelius
(86) Internationale Anmeldenummer: PCT/EP2017/000049
(87) Internationale Veröffentlichungsnummer: WO 2017/178089

(56) Entgegenhaltungen:
- EP-A1- 0 864 401
- DE-A1-102014 212 528
- Bill Buxton: "Multi-Touch Systems that I Have Known and Loved Multi-Touch Systems that I Have Known and Loved", Version, 1. Februar 2009 (2009-02-01), Seiten 1-16, XP055349431, Gefunden im Internet: URL:https://pdfs.semanticscholar.org/7a03/ 6f4a421c29a6ed3bceb2488927d72d7c5e17.pdf [gefunden am 2017-02-24]
- CHRISTIAN RENDL ET AL: "Presstures", HUMAN FACTORS IN COMPUTING SYSTEMS, ACM, 2 PENN PLAZA, SUITE 701 NEW YORK NY 10121-0701 USA, 26. April 2014 (2014-04-26), Seiten 431-434, XP058046680, DOI: 10.1145/2556288.2557146 ISBN: 978-1-4503-2473-1

## Beschreibung

Die Erfindung betrifft eine Werkzeugmaschine mit einem motorisch, insbesondere mechanisch und/oder elektromechanisch und/oder pneumatisch und/oder hydraulisch, verstellbaren Maschinenteil sowie eine Verwendung eines berührempfindlichen Displays zur Ansteuerung eines motorisch verstellbaren Maschinenteils einer derartigen Werkzeugmaschine.

Die Druckschrift DE 10 2014 212 528 A1 offenbart ein Verfahren zum Bedienen einer Steuereinheit einer Maschine oder Anlage mit einem Touchscreenhandgerät aus der Klasse der Smart Devices, wobei eine Software-Anwendung auf dem Touchscreenhandgerät ausgeführt wird, wobei die Software-Anwendung aus unterschiedlichen Anwendungsseiten aufgebaut ist, die jeweils basierend auf einer Konfigurationsdatei erzeugt werden, wenn sie auf dem Touchscreenhandgerät ausgeführt werden, wobei wenigstens eine der unterschiedlichen Anwendungsseiten mit der Steuereinheit in datenübertragender Verbindung steht, wenn sie auf dem Touchscreenhandgerät ausgeführt wird.

Aus der Druckschrift EP 0 864 401 A1 ist ein Tippvorschubverfahren für einen Industrieroboter unter Verwendung einer Graphikanzeige eines Roboters in Kombination mit einer Zeigevorrichtung vorbekannt. Der Tippvorschub erfolgt mit einem System, das eine Robotersteuerung verwendet zum Steuern des Roboterbetriebs, eine mit der Robotersteuerung verbundene Graphikanzeigevorrichtung zum Anzeigen einer Graphik von dem Roboter, eine Zeigevorrichtung zum Eingeben zweidimensionaler Positionen auf einem Anzeigeschirm der Graphikanzeigevorrichtung und einer Vorrichtung zum Umwandeln einer zweidimensionalen Positionseingabe über die Zeigevorrichtung in eine dreidimensionale Positionsausgabe, wobei ebene Positionsdaten verwendet werden.

Bei derartigen Werkzeugmaschinen sind Ansteuerungseinheiten vorgesehen, mit denen sich motorisch verstellbare Maschinenteile dieser Werkzeugmaschinen gezielt verstellen lassen. Zur Ansteuerung werden bisher Hebel, Knöpfe oder sonstige Schaltflächen verwendet, bei deren Betätigung entsprechende Steuersignale von der Ansteuerungseinheit an das jeweilige zu verstellende Maschinenteil übertragen werden. Um die Verstellung des motorisch verstellbaren Maschinenteils mit der erforderlichen Präzision durchführen zu können, ist dabei eine gewisse Erfahrung oder Routine des Benutzers der Werkzeugmaschine erforderlich. Da der Benutzer von der Werkzeugmaschine in der Regel keinerlei Rückmeldung bezüglich der vorgenommenen Verstellung erhält, ist es zweckmäßig, wenn der Benutzer der Werkzeugmaschine Sichtkontakt zu dem motorisch verstellbaren Maschinenteil, das er bedient, halten kann. Insbesondere bei einer großen Distanz zwischen dem Benutzer der Werkzeugmaschine und dem motorisch zu verstellenden Maschinenteil oder auch wenn dieses vergleichsweise klein ist, kann darin eine gewisse Schwierigkeit bestehen.

Aufgabe der Erfindung ist es daher, eine Werkzeugmaschine der eingangs genannten Art zu schaffen, die ein im Vergleich zum Stand der Technik alternatives Bedienkonzept bereitstellt, mit dem sich die zuvor umrissenen Nachteile vermeiden lassen.

Erfindungsgemäß wird diese Aufgabe durch eine Werkzeugmaschine mit den Mitteln und Merkmalen des Anspruchs 1 und insbesondere durch eine solche mit einem motorisch verstellbaren Maschinenteil und einem berührempfindlichen Display gelöst, wobei eine Ansteuerungseinheit der Werkzeugmaschine zu einer Darstellung des Maschinenteils in seinem Momentanzustand auf dem Display und einer Verstellung des Maschinenteils in Abhängigkeit von einer an dem Display ausgeführten Wischgeste eingerichtet ist.

Auf diese Weise kann die gewünschte Verstellung des motorisch verstellbaren Maschinenteils im Vergleich zu den bisher bekannten Bedienkonzepten intuitiver erfolgen. Zudem erhält der Bediener der Werkzeugmaschine über das Display, auf dem der Momentanzustand des Maschinenteils abgebildet ist, ein unmittelbares Feedback bezüglich der vorgenommenen Verstellung. Die Verstellung des Maschinenteils kann besonders intuitiv erfolgen, da der Benutzer oder Bediener der Werkzeugmaschine auf dem Display ein virtuelles Abbild des motorisch verstellbaren Maschinenteils angezeigt bekommt, das er auf dem Display berühren und mittels Bewegung seiner Hände auf oder relativ zu dem Display.in einer gewünschten Weise bewegen, das heißt verstellen kann. Diese Verstellbewegung, die der Benutzer oder Bediener der Werkzeugmaschine mit einer oder beiden Händen oder auch einzelne Fingern einer Hand oder beider Hände auf dem Display ausführt, wird mittels der Ansteuerungseinheit zur Verstellung des motorisch verstellbaren Maschinenteils zumindest mittelbar an dieses übertragen. Auf diese Weise ist es möglich, eine bisher durch Betätigen mehrerer Knöpfe, Hebel oder Schaltflächen an einem Bedienpult einer Werkzeugmaschine zu steuernde Verstellbewegung nun durch einfache Wischgesten auf dem Display vorzugeben. Dadurch kann die Bedienung einer derartigen Werkzeugmaschine vereinfacht werden.

Vorteilhaft kann es sein, wenn die Ansteuerungseinheit zur Erfassung einer Geschwindigkeit der ausgeführten Wischgeste eingerichtet ist. Auf diese Weise kann die Geschwindigkeit der ausgeführten Wischgeste einem Verstellparameter zugeordnet werden. So ist es möglich, aus der erfassten Geschwindigkeit der ausgeführten Wischgeste ein weiteres Steuersignal zu generieren. Beispielsweise kann die Geschwindigkeit der ausgeführten Wischgeste mit einer Verstellgeschwindigkeit des Maschinenteils oder mit einer Beschleunigung des verstellbaren Maschinenteils korrelieren.

Es kann auch zweckmäßig sein, wenn das Display ein druckempfindliches Display ist und die Ansteuerungseinheit zur Erfassung einer Druckstärke einer an dem Display ausgeführten Wischgeste eingerichtet ist. Auf diese Weise ist es möglich, aus einem auf das Display beim Ausführen der Wischgeste ausgeübten Druck einen Verstellparameter der Verstellbewegung des verstellbaren Maschinenteils abzuleiten.

Wenn die Ansteuerungseinheit zu einer Einstellung einer Geschwindigkeit der Verstellung des Maschinenteils eingerichtet ist, kann mittels einer Wischgeste die Bewegung des motorisch zu verstellenden Maschinenteils vorgegeben werden. Die Geschwindigkeit, mit der die Verstellung des motorisch verstellbaren Maschinenteils dann vorgenommen wird, kann dann von der Ansteuerungseinheit vorgegeben werden. Zudem ist es möglich, dass die Ansteuerungseinheit für unterschiedliche Anwendungsfälle unterschiedliche Geschwindigkeiten der Verstellung des Maschinenteils vorgibt.

Um eine Zweihand- und/oder Zweifingerbedienung der Werkzeugmaschine zu ermöglichen, kann es zweckmäßig sein, wenn die Ansteuerungseinheit zu einer Erfassung von wenigstens zwei gleichzeitigen Berührungen am Display eingerichtet ist. Besonders bevorzugt kann es in diesem Zusammenhang sein, wenn die Ansteuerungseinheit zu einer getrennten Erfassung von wenigstens zwei gleichzeitigen Berührungen am Display eingerichtet ist. Auf diese Weise ist es möglich, ein oder mehrere Steuersignale auch in Abhängigkeit einer Relativbewegung der auf dem Display vorgenommenen wenigstens zwei gleichzeitigen Berührungen zueinander zu generieren. Dies erhöht die Zahl der über das Display vorgebaren Steuersignale und dadurch die Variabilität des erfindungsgemäßen Bedienkonzepts.

Bei einer Ausführungsform der erfindungsgemäßen Werkzeugmaschine kann vorgesehen sein, dass das Maschinenteil zwei relativ zueinander bewegliche Elemente aufweist. Die Ansteuerungseinheit kann dann zum Auslösen einer Relativbewegung dieser Elemente gegeneinander oder relativ zueinander durch eine wenigstens zwei gleichzeitigen Berührungen am Display ausführende Wischgeste eingerichtet sein. Auf diese Weise kann die Variabilität der Werkzeugmaschine einerseits und der Verstellbewegungen des Maschinenteils andererseits erhöht werden, was auch zu einer noch intuitiveren Bedienung der Werkzeugmaschine beitragen kann.

Das Maschinenteil kann in wenigstens zwei Achsen verstellbar sein. Die Ansteuerungseinheit kann dann zu einer getrennten Verstellung in den wenigstens zwei Achsen über unterschiedliche Wischbewegungen eingerichtet sein. Besonders vorteilhaft ist es in diesem Zusammenhang, wenn die unterschiedlichen Wischbewegungen solche sind, die jeweils eine Achse der wenigstens zwei Achsen am Display vorzugsweise lagerichtig nachzeichnen.

Um dem Bediener zumindest ein visuelles Feedback oder eine visuelle Rückmeldung über die Verstellbewegung des motorisch verstellbaren Maschinenteils geben zu können, ist die Ansteuerungseinheit zu einer Berechnung einer lagerichtigen Darstellung eines Momentanzustandes des Maschinenteils anhand eines Messsignals wenigstens eines Sensors eingerichtet. Dieser Sensor ist in oder an dem motorisch verstellbaren Maschinenteil an der Werkzeugmaschine, vorzugsweise innerhalb eines Bearbeitungsraumes der Werkzeugmaschine, angeordnet.

Die eingangs genannte Aufgabe wird auch durch eine erfindungsgemäße Verwendung eines berührempfindlichen Displays gemäß dem auf eine Verwendung gerichteten, nebengeordneten Anspruch gelöst. Erfindungsgemäß wird eine Verwendung eines berührempfindlichen Displays zu einer Ansteuerung eines motorisch verstellbaren Maschinenteils einer Werkzeugmaschine vorgeschlagen, insbesondere einer solchen, wie sie zuvor ausführlich beschrieben wurde. Dabei ist vorgesehen, dass das Maschinenteil in seinem Momentanzustand an dem Display angezeigt und durch Ausführen einer Wischgeste an dem Display motorisch verstellt wird.

Zweckmäßigerweise kann eine Geschwindigkeit einer Verstellbewegung in Abhängigkeit von einer Geschwindigkeit der erfassten Wischgeste eingestellt werden. Auf diese Weise kann der Bediener oder Benutzer der Werkzeugmaschine die Geschwindigkeit der Verstellbewegung des motorisch verstellbaren Maschinenteils in Abhängigkeit der Geschwindigkeit, mit der er die Wischgesten an dem Display ausführt, vorgeben.

Das Maschinenteil kann zwei relativ zueinander bewegliche Elemente aufweisen. Dabei kann eine Relativbewegung der Elemente gegeneinander durch eine wenigstens zwei gleichzeitige Berührungen am Display ausführende Wischgeste ausgelöst werden. Dies kann eine intuitive Bedienung und Ansteuerung des motorisch verstellbaren Maschinenteils mittels Wischgesten verbessern.

Die Bedienung beziehungsweise Ansteuerung der Werkzeugmaschine kann für einen Benutzer noch komfortabler gestaltet werden, wenn das Maschinenteil, welches verstellt werden soll, durch Anwahl des dargestellten Maschinenteils am Display ausgewählt werden kann. Dabei kann das entsprechende Maschinenteil durch die Anwahl am Display zur Verstellung aktiviert werden, so dass anschließend an dem Display in Bezug auf das dort dargestellte Maschinenteil durchgeführte Wischgesten mittels einer, beispielsweise der bereits zuvor erwähnten, Ansteuerungseinheit auf das Maschinenteil übertragen und in Verstellbewegungen umgesetzt werden können.

Dabei kann das Maschinenteil in wenigstens zwei Achsen getrennt voneinander über unterschiedliche, insbesondere jeweils eine Achse der wenigstens zwei Achsen am Display vorzugsweise lagerichtig nachzeichnende Wischbewegungen verstellt werden. Dies ermöglicht eine höchst intuitive Bedienung der Werkzeugmaschine.

Um den Momentanzustand des motorisch verstellbaren Maschinenteils, vorzugsweise in Echtzeit oder mit nur zu vernachlässigenderer Verzögerung, an dem Display darstellen zu können, kann es zweckmäßig sein, wenn der Momentanzustand des Maschinenteils über wenigstens einen Sensor, der an der Werkzeugmaschine ausgebildet sein kann, erfasst wird. Ein von dem wenigstens einen Sensor generiertes Signal kann dann, beispielsweise über eine, insbesondere die bereits zuvor erwähnte, Ansteuerungseinheit zur Veränderung der Darstellung des Maschinenteils auf dem Display an das Display übertragen werden.

Nachstehend ist ein Ausführungsbeispiel der Erfindung anhand der Zeichnung näher beschrieben. Es zeigen in zum Teil stark schematisierter Darstellung:
- Fig. 1: ein Blockdiagramm einer erfindungsgemäßen Werkzeugmaschine sowie
- Fig. 2: eine Draufsicht einer Bedieneinheit einer erfindungsgemäßen Werkzeugmaschine, wobei neben einer Mehrzahl von Bedientasten, Knöpfen, Schaltern und Hebeln auch ein berührempfindliches Display als zentrales Bedienelement zu erkennen ist.

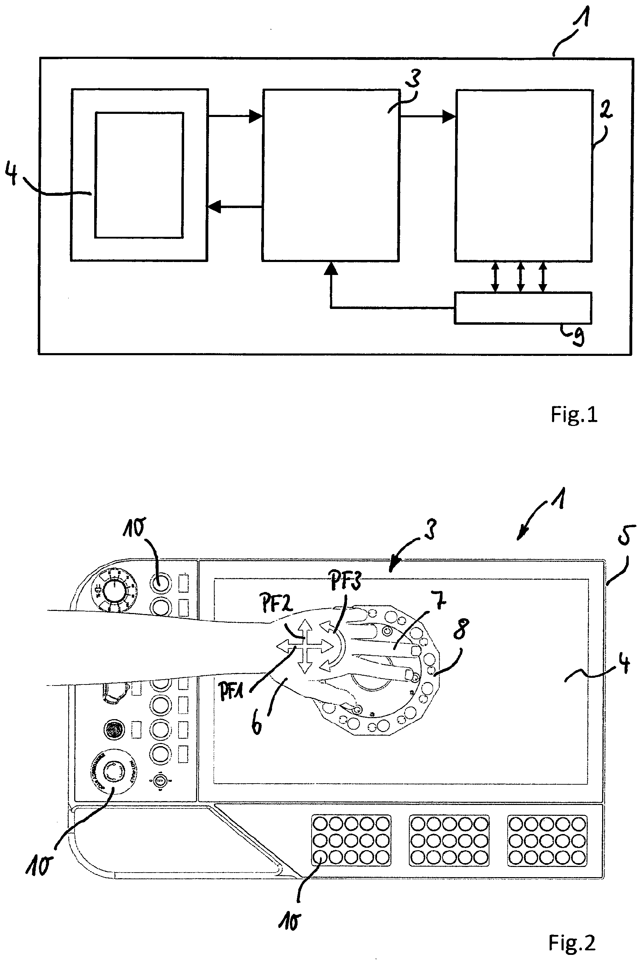

Eine im Ganzen mit 1 bezeichnete Werkzeugmaschine weist gemäß Fig. 1 zumindest ein motorisch verstellbares Maschinenteil 2 auf, das mit einer Ansteuerungseinheit 3 der Werkzeugmaschine zum Empfang von Steuersignalen verbunden ist. Die Werkzeugmaschine 1 weist zudem ein berührempfindliches Display 4 auf, das gemäß Fig. 2 an einer Bedienkonsole 5 angeordnet ist. In diese Bedienkonsole 5 ist die Ansteuerungseinheit 3 integriert.

Die Ansteuerungseinheit 3 ist zu einer Darstellung des Maschinenteils 2 in seinem Momentanzustand auf dem Display 4 und zu einer Verstellung des Maschinenteils 2 in Abhängigkeit von einer an dem Display 4 ausgeführten Wischgeste eingerichtet. Gemäß Fig. 2 kann diese Wischgeste, angedeutet durch die Doppelpfeile Pf 1 und Pf 2 und Pf 3, von einer Hand 6 eines Bedieners der Werkzeugmaschine 1 auf das Display 4 ausgeführt werden.

Die Ansteuerungseinheit 3 ist zur Erfassung einer Geschwindigkeit der an dem Display 4 ausgeführten Wischgeste eingerichtet. Das Display 4 ist ein druckempfindliches Display. Das heißt, dass der Druck, der mittels einer an dem Display 4 ausgeführten Wischgeste auf das Display 4 ausgeübt wird, mithilfe des Displays 4 erfasst oder bestimmt werden kann. Die Ansteuerungseinheit 3 ist zur Erfassung der Druckstärke der an dem Display 4 ausgeführten Wischgeste eingerichtet. Damit kann ein Verstellparameter der Verstellbewegung des Maschinenteils 2 aus der Druckstärke der Wischgeste an dem Display 4 abgeleitet und von der Ansteuerungseinheit 3 zur Ansteuerung und Bewegung des Maschinenteils 2 genutzt werden.

Wie die Doppelpfeile Pf 1, Pf 2 und Pf 3 verdeutlichen, kann diese Wischgeste sowohl in geradlinigen Bewegungen als auch in Dreh- oder Schwenkbewegungen oder auch in Bewegungen, die entlang einer gebogenen Bewegungslinie an dem Display 4 ausgeführt werden, bestehen.

Die Ansteuerungseinheit 3 ist auch zu einer Einstellung einer Geschwindigkeit der Verstellung des Maschinenteils 2 eingerichtet. Die Ansteuerungseinheit 3 ist außerdem zur getrennten Erfassung von wenigstens zwei gleichzeitigen Berührungen am Display 4 eingerichtet. Diese wenigstens zwei gleichzeitigen Berührungen können mittels unterschiedlicher Finger 7 der Hand 6 des Benutzers oder Bedieners der Werkzeugmaschine 1 oder auch mittels zweier Hände oder unterschiedlicher Finger zweier unterschiedlicher Hände an dem Display 4 ausgeführt werden. Fig. 2 zeigt deutlich, dass auf dem Display 4 ein virtuelles Abbild 8 des motorisch zu verstellenden Maschinenteils 2 abgebildet ist und dass der Benutzer mit einer Hand 6 und einzelnen Fingern 7 der Hand 6 das virtuelle Abbild 8 "ergreifen" und durch eine Ausführung einer Wischgeste auf dem Display 4 in gewünschter Weise verstellen kann. Dabei wird die an dem Display 4 mittels der Wischgeste ausgeführte Verstellbewegung über die Ansteuerungseinheit 3 auf das zu verstellende Maschinenteil 2 übertragen. Die zwischen dem Display 4 und der Ansteuerungseinheit 3 beziehungsweise zwischen der Ansteuerungseinheit 3 und dem Maschinenteil 2 in Fig. 1 dargestellten Pfeile veranschaulichen dabei den Datenbeziehungsweise Informationsfluss.

Das Maschinenteil 2 weist zwei relativ zueinander bewegliche Elemente auf. Die Ansteuerungseinheit 3 ist zu einem Auslösen einer Relativbewegung dieser Elemente gegeneinander durch eine wenigstens zwei gleichzeitige Berührungen am Display 4 ausführende Wischgeste eingerichtet.

Das Maschinenteil 2 kann in zumindest zwei Achsen verstellt werden. Dabei ist die Ansteuerungseinheit 3 zu einer getrennten Verstellung des Maschinenteils 2 in den wenigstens zwei Achsen über unterschiedliche, jeweils eine Achse der wenigstens zwei Achsen am Display 4 lagerichtig nachzeichnende Wischbewegungen eingerichtet. Auf diese Weise lassen sich durch unterschiedliche Wischbewegungen, beispielsweise mittels zwei unterschiedlicher Finger 7 einer Hand 6 oder mittels zwei unterschiedlicher Finger 7 zweier unterschiedlicher Hände, die wenigstens zwei Achsen des Maschinenteils 2 unabhängig voneinander verstellen oder ansteuern.

Die Ansteuerungseinheit 3 ist zudem zu einer Berechnung einer lagerichtigen Darstellung eines Momentanzustandes des Maschinenteils 2 anhand eines Messsignals wenigstens eines Sensors 9 eingerichtet. Auf diese Weise kann das auf dem Display 4 dargestellte virtuelle Abbild 8 des Maschinenteils 2 aufgrund der von dem wenigstens einen Sensor 9 der Werkzeugmaschine 1 erhaltenen Daten tatsächlich auch dem realen oder Momentanzustand des motorisch verstellbaren Maschinenteils 2 entsprechen. Die zwischen Sensor 9 und Maschinenteil 2 beziehungsweise zwischen Sensor 9 und Ansteuerungseinheit 3 in Fig. 1 dargestellte Pfeile verdeutlichen wiederum den Daten- und/oder Informationsfluss.

Ein bestehendes Bedienkonzept, das aus Knöpfen, Hebeln, Schaltern oder dergleichen Bedienelementen 10 besteht, wie sie an der Bedienkonsole 5 gemäß Fig. 2 auch dargestellt sind, kann durch die Verwendung des berührempfindlichen Displays 4 zur Ansteuerung des motorisch verstellbaren Maschinenteils 2 der Werkzeugmaschine 1 ersetzt oder ergänzt werden.

Das Maschinenteil 2 wird in seinem Momentanzustand auf dem Display 4 angezeigt. Angezeigt wird dabei ein virtuelles Abbild 8 des Maschinenteils 2. Durch Ausführen einer Wischgeste an dem Display 4 kann das Maschinenteil 2 in der gewünschten Art und Weise motorisch verstellt werden.

Dabei kann in zumindest einem Ansteuerungsmodus eine Geschwindigkeit einer Verstellbewegung in Abhängigkeit von einer Geschwindigkeit der erfassten Wischgeste eingestellt werden.

Das Maschinenteil 2 weist die zwei relativ zueinander beweglichen Elemente auf. Eine Relativbewegung der Elemente gegeneinander wird dann durch eine wenigstens zwei gleichzeitige Berührungen am Display 4 ausführende Wischgeste ausgelöst.

Insbesondere dann, wenn die Werkzeugmaschine 1 mehrere Maschinenteile 2 aufweist, kann das Maschinenteil 2, das verstellt werden soll, durch Anwahl des dargestellten Maschinenteils 2 am Display 4 ausgewählt und auch zur Verstellung aktiviert werden.

Das Maschinenteil 2 wird in wenigstens zwei Achsen getrennt voneinander über unterschiedliche, jeweils eine Achse der wenigstens zwei Achsen am Display 4 lagerichtig nachzeichnende Wischbewegungen verstellt (vgl. Doppelpfeile Pf 1, Pf 2 und Pf 3). Wie bereits zuvor ausgeführt, wird der Momentanzustand des Maschinenteils 2 über den wenigstens einen Sensor 9 erfasst (siehe Doppelpfeile zwischen Sensor 9 und Maschinenteil 2 in Fig. 1). Mittels der von dem wenigstens einen Sensor 9 erfassten Daten, die an die Ansteuerungseinheit 3 übertragen werden, kann dann das virtuelle Abbild 8 des Maschinenteils 2 auf dem Display 4 erzeugt werden. Das virtuelle Abbild 8 des Maschinenteils 2 entspricht dem Momentanzustand des Maschinenteils 2, der sich durch die motorische Verstellung, die durch die an dem Display 4 ausgeführten Wischgesten hervorgerufen wird, verändert.

Erfindungsgemäß ist vorgesehen, dass an der Werkzeugmaschine, die ein motorisch verstellbares Maschinenteil 2 aufweist, das berührempfindliche Display 4 dazu verwendet wird, das Maschinenteil 2 in seinem Momentanzustand an dem Display 4 anzuzeigen und durch Ausführungen einer Wischgeste an dem Display 4 motorisch zu verstellen. Dadurch kann eine Bedienung einer Werkzeugmaschine 1 vereinfacht werden.

### Bezugszeichenliste

1 Werkzeugmaschine
2 Maschinenteil
3 Ansteuerungseinheit
4 Display
5 Bedienkonsole
6 Hand
7 Finger
8 virtuelles Abbild v. 2
9 Sensor
10 Bedienelemente

## Patentansprüche

1. Werkzeugmaschine (1) mit einem motorisch, insbesondere mechanisch und/oder elektromechanisch und/oder pneumatisch und/oder hydraulisch, verstellbaren Maschinenteil (2) und einem berührempfindlichen Display (4), **dadurch gekennzeichnet, dass** eine Ansteuerungseinheit (3) zu einer Darstellung des Maschinenteils (2) in seinem Momentanzustand auf dem Display in Form eines virtuellen Abbilds des Maschinenteils (2), zu einer Berechnung einer lagerichtigen Darstellung des Momentanzustandes des Maschinenteils (2) anhand eines Messsignals wenigstens eines Sensors (9), der in oder an dem motorisch verstellbaren Maschinenteil (2) an der Werkzeugmaschine (1) angeordnet ist, zu einer Verstellung des Maschinenteils (2) in Abhängigkeit von einer an dem Display (4) ausgeführten Wischgeste und zu einer Erfassung von wenigstens zwei gleichzeitigen Berührungen am Display (4) eingerichtet ist, und dass das Maschinenteil (2) in wenigstens zwei Achsen verstellbar ist, wobei die Ansteuerungseinheit (3) zu einer getrennten Verstellung in den wenigstens zwei Achsen über unterschiedliche, jeweils eine Achse der wenigstens zwei Achsen am Display (4) nachzeichnenden Wischbewegungen eingerichtet ist.

2. Werkzeugmaschine nach Anspruch 1, **dadurch gekennzeichnet, dass** die Ansteuerungseinheit (3) zur Erfassung einer Geschwindigkeit der ausgeführten Wischgeste eingerichtet ist und/oder dass das Display (4) ein druckempfindliches Display ist und die Ansteuerungseinheit (3) zur Erfassung einer Druckstärke einer an dem Display (4) ausgeführten Wischgeste eingerichtet ist.

3. Werkzeugmaschine nach Anspruch 1 oder 2, **dadurch gekennzeichnet, dass** die Ansteuerungseinheit (3) zu einer Einstellung einer Geschwindigkeit der Verstellung des Maschinenteils (2) eingerichtet ist.

4. Werkzeugmaschine nach einem der Ansprüche 1 bis 3, **dadurch gekennzeichnet, dass** die Ansteuerungseinheit (3) zu einer getrennten Erfassung von wenigstens zwei gleichzeitigen Berührungen am Display (4) eingerichtet ist.

5. Werkzeugmaschine nach einem der Ansprüche 1 bis 4, **dadurch gekennzeichnet, dass** das Maschinenteil (2) zwei relativ zueinander bewegliche Elemente aufweist, wobei die Ansteuerungseinheit (3) zu einem Auslösen einer Relativbewegung der Elemente gegeneinander durch eine wenigstens zwei gleichzeitige Berührungen am Display (4) ausführende Wischgeste eingerichtet ist.

6. Werkzeugmaschine nach einem der Ansprüche 1 bis 5, **dadurch gekennzeichnet, dass** die Ansteuerungseinheit (3) zu einer getrennten Verstellung in den wenigstens zwei Achsen über unterschiedliche, jeweils eine Achse der wenigstens zwei Achsen am Display (4) lagerichtig nachzeichnenden Wischbewegungen eingerichtet ist.

7. Verwendung eines berührempfindlichen Displays (4) zu einer Ansteuerung eines motorisch verstellbaren Maschinenteils (2) einer Werkzeugmaschine (1) nach einem der vorangehenden Ansprüche, **dadurch gekennzeichnet, dass** das Maschinenteil (2) in seinem Momentanzustand an dem Display (4) angezeigt und durch Ausführen einer Wischgeste an dem Display (4) motorisch verstellt wird.

8. Verwendung nach Anspruch 7, **dadurch gekennzeichnet, dass** eine Geschwindigkeit einer Verstellbewegung in Abhängigkeit von einer Geschwindigkeit der erfassten Wischgeste eingestellt wird.

9. Verwendung nach Anspruch 7 oder 8, **dadurch gekennzeichnet, dass** das Maschinenteil (2) zwei relativ zueinander bewegliche Elemente aufweist, wobei eine Relativbewegung der Elemente gegeneinander durch eine wenigstens zwei gleichzeitige Berührungen am Display (4) ausführende Wischgeste ausgelöst wird.

10. Verwendung nach einem der Ansprüche 7 bis 9, **dadurch gekennzeichnet, dass** das Maschinenteil (2), welches verstellt werden soll, durch Anwahl des dargestellten Maschinenteils (2) am Display (4) ausgewählt wird.

11. Verwendung nach einem der Ansprüche 7 bis 10, **dadurch gekennzeichnet, dass** das Maschinenteil (2) in wenigstens zwei Achsen getrennt voneinander über unterschiedliche, insbesondere jeweils eine Achse der wenigstens zwei Achsen am Display (4) vorzugsweise lagerichtig nachzeichnende Wischbewegungen verstellt wird.

12. Verwendung nach einem der Ansprüche 7 bis 11, **dadurch gekennzeichnet, dass** der Momentanzustand des Maschinenteils über wenigstens einen Sensor (9) erfasst wird.

## Claims

1. Machine tool (1) comprising a machine part (2), which can be adjusted by motor, in particular in a mechanical and/or electromechanical and/or pneumatic and/or hydraulic manner, and comprising a touch-sensitive display (4), **characterized in that** a drive unit (3) is designed to illustrate the machine part (2) in its instantaneous state on the display in the form of a virtual image of the machine part (2), to calculate a correctly positioned illustration of the instantaneous state of the machine part (2) on the basis of a measurement signal from at least one sensor (9), which is arranged in or on the machine part (2), which can be adjusted by motor, on the machine tool (1), to adjust the machine part (2) depending on a swiping gesture which is executed on the display (4) and to detect at least two simultaneous touches on the display (4), and **in that** the machine part (2) can be adjusted in at least two axes, with the drive unit (3) being designed for separate adjustment in the at least two axes by means of different swiping movements which each trace one axis of the at least two axes on the display (4).

2. Machine tool according to Claim 1, **characterized in that** the drive unit (3) is designed to detect a speed of the executed swiping gesture and/or **in that** the display (4) is a pressure-sensitive display and the drive unit (3) is designed to detect a pressure intensity of a swiping gesture which is executed on the display (4).

3. Machine tool according to Claim 1 or 2, **characterized in that** the drive unit (3) is designed to set a speed for the adjustment of the machine part (2).

4. Machine tool according to one of Claims 1 to 3, **characterized in that** the drive unit (3) is designed to separately detect at least two simultaneous touches on the display (4).

5. Machine tool according to one of Claims 1 to 4, **characterized in that** the machine part (2) has two elements which can move relative to one another, with the drive unit (3) being designed to trigger a relative movement of the elements towards one another by a swiping gesture which executes at least two simultaneous touches on the display (4).

6. Machine tool according to one of Claims 1 to 5, **characterized in that** the drive unit (3) is designed for separate adjustment in the at least two axes by means of different swiping movements which each trace one axis of the at least two axes on the display (4) in the correct position.

7. Use of a touch-sensitive display (4) for driving a machine part (2), which can be adjusted by motor, of a machine tool (1) according to one of the preceding claims, **characterized in that** the machine part (2) is displayed on the display (4) in its instantaneous state and is adjusted by motor by a swiping gesture being executed on the display (4).

8. Use according to Claim 7, **characterized in that** a speed of an adjustment movement is set depending on a speed of the detected swiping gesture.

9. Use according to Claim 7 or 8, **characterized in that** the machine part (2) has two elements which can move relative to one another, with a relative movement of the elements towards one another being triggered by a swiping gesture which executes at least two simultaneous touches on the display (4).

10. Use according to one of Claims 7 to 9, **characterized in that** the machine part (2) which is intended to be adjusted is chosen by selecting the illustrated machine part (2) on the display (4).

11. Use according to one of Claims 7 to 10, **characterized in that** the machine part (2) is adjusted in at least two axes separately from one another by means of different swiping movements which, in particular, each trace one axis of the at least two axes on the display (4), preferably in the correct position.

12. Use according to one of Claims 7 to 11, **characterized in that** the instantaneous state of the machine part is detected by means of at least one sensor (9).

## Revendications

1. Machine-outil (1) comprenant une partie de machine (2) qui est déplaçable de façon motorisée, en particulier de façon mécanique et/ou électromécanique et/ou pneumatique et/ou hydraulique, et un écran tactile (4), **caractérisée en ce qu'**une unité de commande (3) est conçue pour une représentation de la partie de machine (2) dans son état momentané sur l'écran sous la forme d'une image virtuelle de la partie de machine (2), pour un calcul d'une représentation dans la bonne position de l'état momentané de la partie de machine (2) sur la base d'un signal de mesure d'au moins un capteur (9), qui est disposé dans ou sur la partie de machine (2) déplaçable de façon motorisée sur la machine-outil (1), pour un déplacement de la partie de machine (2) en fonction d'une action de glissement qui est réalisée sur l'écran (4), et pour une détection d'au moins deux contacts simultanés sur l'écran (4), et **en ce que** la partie de machine (2) est déplaçable dans au moins deux axes, dans laquelle l'unité de commande (3) est conçue pour un déplacement séparé dans lesdits au moins deux axes par l'intermédiaire de différents mouvements de glissement qui tracent respectivement un axe desdits au moins deux axes sur l'écran (4).

2. Machine-outil selon la revendication 1, **caractérisée en ce que** l'unité de commande (3) est conçue pour la détection d'une vitesse de l'action de glissement réalisée et/ou **en ce que** l'écran (4) est un écran sensible à la pression, et l'unité de commande (3) est conçue pour la détection d'une force de pression d'une action de glissement qui est réalisée sur l'écran (4).

3. Machine-outil selon la revendication 1 ou 2, **caractérisée en ce que** l'unité de commande (3) est conçue pour un réglage d'une vitesse du déplacement de la partie de machine (2).

4. Machine-outil selon l'une quelconque des revendications 1 à 3, **caractérisée en ce que** l'unité de commande (3) est conçue pour une détection séparée d'au moins deux contacts simultanés sur l'écran (4).

5. Machine-outil selon l'une quelconque des revendications 1 à 4, **caractérisée en ce que** la partie de machine (2) comprend deux éléments mobiles l'un par rapport à l'autre, dans laquelle l'unité de commande (3) est conçue pour un déclenchement d'un mouvement relatif des éléments l'un par rapport à l'autre par une action de glissement qui réalise au moins deux contacts simultanés sur l'écran (4).

6. Machine-outil selon l'une quelconque des revendications 1 à 5, **caractérisée en ce que** l'unité de commande (3) est conçue pour un déplacement séparé dans lesdits au moins deux axes par l'intermédiaire de différents mouvements de glissement qui tracent dans la bonne position respectivement un axe desdits au moins deux axes sur l'écran (4).

7. Utilisation d'un écran tactile (4) pour une commande d'une partie de machine (2) déplaçable de façon motorisée d'une machine-outil (1) selon l'une quelconque des revendications précédentes, **caractérisée en ce que** la partie de machine (2) dans son état momentané est affichée sur l'écran (4) et est déplacée de façon motorisée par la réalisation d'une action de glissement sur l'écran (4).

8. Utilisation selon la revendication 7, **caractérisée en ce qu'**une vitesse d'un mouvement de déplacement est réglée en fonction d'une vitesse de l'action de glissement détectée.

9. Utilisation selon la revendication 7 ou 8, **caractérisée en ce que** la partie de machine (2) comprend deux éléments mobiles l'un par rapport à l'autre, dans laquelle un mouvement relatif des éléments l'un par rapport à l'autre est déclenché par une action de glissement qui réalise au moins deux contacts simultanés sur l'écran (4).

10. Utilisation selon l'une quelconque des revendications 7 à 9, **caractérisée en ce que** la partie de machine (2) qui doit être déplacée est choisie par la sélection de la partie de machine (2) qui est représentée sur l'écran (4).

11. Utilisation selon l'une quelconque des revendications 7 à 10, **caractérisée en ce que** la partie de machine (2) est déplacée dans au moins deux axes séparément l'un de l'autre par l'intermédiaire de différents mouvements de glissement qui tracent de préférence dans la bonne position en particulier respectivement un axe desdits au moins deux axes sur l'écran (4).

12. Utilisation selon l'une quelconque des revendications 7 à 11, **caractérisée en ce que** l'état momentané de la partie de machine est détecté par l'intermédiaire d'au moins un capteur (9).
